# EUROPÄISCHE PATENTANMELDUNG

(11) **EP 2 859 977 A1**
(43) Veröffentlichungstag der Anmeldung: **15.04.2015**
(21) Anmeldenummer: 14187872.8
(22) Anmeldetag: 07.10.2014
(51) Int. Cl.: B23D 61/04, B23C 5/08, B23C 5/22

(54) **Spanabhebendes Werkzeug**

(30) Priorität: 10.10.2013 DE 102013220449
(71) Anmelder: Kohnle GmbH, 83059 Kolbermoor (DE)
(72) Erfinder: Kohnle, Michael, 83059 Kolbermoor (DE)
(74) Vertreter: Neymeyr, Ulrich Theodor Paul

(57) **Zusammenfassung**

Ein spanabhebendes Werkzeug (1), umfasst einen Grundkörper (2) und eine Mehrzahl von mit dem Grundkörper (2) verklebten Schneideinsätzen (10). Dabei umfasst jeder Schneideinsatz (10) eine Schneide (20) und weist der Schneideinsatz (10) gegenüberliegend von der Spanfläche (30) eine Haltefläche (50) auf, die mit dem Grundkörper (2) verklebt ist. Einem Teil der Haltefläche (50) gegenüberliegend und von der Schneide (20) entfernt ist eine Versatzfläche (80) vorgesehen, die mit dem Grundkörper (2) verklebt ist, und zwischen der Versatzfläche (80) und der Spanfläche (30) besteht ein Versatz (v).

## Beschreibung

Die Erfindung betrifft ein spanabhebendes Werkzeug gemäß dem Oberbegriff des Anspruchs 1. Dieses kann insbesondere ein Dreh-, Fräs-, Bohr-, Säge-, oder Reibwerkzeug sein. Das Werkzeug ist dabei mit Schneideinsätzen versehen, die aus einem schlag- und/oder verschleißfestem Werkstoff bestehen oder damit zumindest teilweise beschichtet sind.

Solche Werkzeuge werden dann eingesetzt, wenn es darauf ankommt, bei hohen Schnittgeschwindigkeiten zu arbeiten und zudem lange Standzeiten zu realisieren. Bevorzugt werden die betrachteten Werkzeuge eingesetzt, wenn ein hohes Materialabtragsvolumen gefordert ist, wie es sich aus einer hohen Schnittgeschwindigkeit und hohem Vorschub ergibt. Herkömmlich werden derartige Schneideinsätze verlötet, da bei hohen Schneidleistungen hohe Temperaturen entstehen. Hartlote haben Schmelztemperaturen von 400° - 800°C. Auch wenn die Temperatur unmittelbar an der Schneide bis zu 1000°C betragen kann, so liegt die mittlere Temperatur oder Kerntemperatur des Schneideinsatzes kaum über 400°C und so kann der Schneideinsatz über eine Verlötung dauerhaft und sicher an dem Grundkörper des Werkzeugs gehalten werden. Bei einer Holz- oder Aluminiumzerspanung kann die Schnittgeschwindigkeit 50 - 100 m/s betragen. Bei einer Stahlbearbeitung liegt sie mit 100 bis 200 m/min deutlich niedriger.

Lötverfahren haben u.a. den Nachteil, dass es aufwendig und teilweise unmöglich ist, während des Lötens den Schneideinsatz exakt zu positionieren. So ist es bei dem Löten nicht möglich, die Schneideinsätze derart genau zu auszurichten, dass kein nachgelagerter Verarbeitungsschritt des Schleifens der Schneiden auf die Sollform und Solllage notwendig ist. Es ist aus DE 10 2010 036 874 A1 bekannt, dass Schneideinsätze verklebt werden können. Aufgrund der maximal zulässigen Temperatur des Klebstoffs ergeben sich maximale Schneidleistungen, die deutlich unterhalb der Schneidleistungen von verlöteten Schneideinsätzen liegen.

Die Aufgabe der vorliegenden Erfindung ist es, ein spanabhebendes Werkzeug zu entwickeln, bei dem zumindest ein Schneideinsatz verklebt ist und das bei hohen Schneidleistungen verwendet werden kann. Der Begriff "hohe Schneidleistung" wird dabei synonym für hohe maximale Temperaturen an der Schneide verwendet. Auch soll das Werkzeug bevorzugt so herstellbar sein, dass die Schneideinsätze nach dem Verkleben ohne eine weitere Bearbeitungsstufe verwendbar sind.

Diese Aufgabe wird mit den Merkmalen des Anspruchs 1 gelöst.

Ein spanabhebendes Werkzeug weist einen Grundkörper und eine Mehrzahl von mit dem Grundkörper verklebten Schneideinsätzen auf. Dabei umfasst jeder Schneideinsatz eine Schneide. Der Schneideinsatz umfasst gegenüberliegend von seiner Spanfläche eine Haltefläche, die mit dem Grundkörper verklebt ist. Insbesondere ergibt sich die Schneide als die Kante zwischen der Spanfläche und der Freifläche. Einem Teil der Haltefläche gegenüberliegend und von der Schneide entfernt ist eine Versatzfläche vorgesehen, die mit dem Grundkörper verklebt ist und zwischen der Versatzfläche und der Spanfläche besteht ein Versatz. Ein Vorteil des Versatzes besteht darin, dass die Spanfläche, also die Fläche, an der der Span abgleiten kann, nicht mit der unteren Verklebefläche identisch ist. Die Spanfläche muss von ihrer Winkellage und Oberflächengüte sehr exakt ausgeführt sein. Die Versatzfläche oder genauer der Abstand von der Versatzfläche zu der gegenüberliegenden Haltefläche muss mit einer engen Passung versehen sein, um eine gute Verklebung zu bewirken. Schleiftechnisch ist es einfacher hierfür unterschiedliche Flächen zu definieren, die entsprechend unterschiedlich bearbeitet werden. In diesem Sinne soll die Spanfläche eine andere Fläche als die Versatzfläche sein. Zudem kann bei der Versatzfläche eine geringere Oberflächengüte, also eine größere Rauigkeit, vorgesehen sein als bei der Spanfläche, um die Benetzungsoberfläche mit dem Klebstoff zu vergrößern. Da diese Oberflächen bereits vor dem Verkleben herstellbar sind, entfällt eine Nachbearbeitung der Schneideinsätze nach dem Verkleben. Da die Versatzfläche nicht in einer Verlängerung der Spanfläche liegt, können Späne, die an der Spanfläche abgleiten, nicht in die Versatzfläche, also eine der Hauptflächen der Schneideinsatzverklebung gelangen, dort brechen und den nachfolgenden Spanabfluss behindern.

Alternativ und/oder zusätzlich kann zwischen der Versatzfläche und der Spanfläche ein Winkel bestehen, der größer als 10° und kleiner als 80° ist und insbesondere derart angeordnet ist, dass die Dicke der Schneideeinsätze im Bereich der Versatzfläche größer ist als im Bereich der Spanfläche. Anders ausgedrückt ist die Spanfläche bevorzugt derart angeordnet, dass die Dicke der Schneideeinsätze im Bereich der Versatzfläche mit zunehmenden Abstand von der Schneide steigt. Auch kann ein offener Winkel zwischen der Spanfläche und der Versatzfläche gemessen werden, der nicht durch das Material des Schneideinsatzes gemessen wird und dieser offene Winkel beträgt 180° minus dem oben genannten Winkel. Durch diese Ausrichtung der Versatzfläche kann der Schneideinsatz bei seiner Montage in einen zugeordneten keilförmigen Vorsprung des Grundkörpers hereingeschwenkt werden. Dabei entspricht die Schwenkrichtung der Richtung der Krafteinwirkung auf den Schneideinsatz während des Schneidevorgangs. Hierdurch wird der Anteil der Klebeflächen, auf die beim Schneiden vor allem Druck- und Scherbelastungen herrscht, vergrößert. Da Klebstoffe technisch bedingt bei Druck- und Scherbelastungen bessere Dauerklebefestigkeiten als bei Zugbelastungen aufweisen, kann über diese konstruktive Anpassung die Klebefestigkeit erhöht werden, und so kann das erfindungsgemäße Problem der Erzielung hoher Schneidbelastungen gelöst werden. Neben diesem Vorteil der besseren Verklebung durch den genannten Winkel ergibt sich zudem, dass bei der Verwendung von hohen Drehzahlen bei einem (Teil-)Lösen der Klebeverbindung der jeweilige Einsatz aufgrund von Fliehkräften nicht zu einer Gefahr für die Umgebung werden kann. Dieser Vorteil ergibt sich daraus, dass sich in Werkzeugradialrichtung ein Hinterschnitt von dem Einsatz relativ zu dem Grundkörper ergibt.

Bevorzugt beträgt der Versatz von der Versatzfläche zu der Spanfläche mindestens 0,7 mm und insbesondere mindestens 1 mm. Bevorzugt ist die Versatzfläche gegenüber der Spanfläche zurückversetzt. Zurückversetzt heißt insbesondere, dass die Materialstärke des Schneideinsatzes im zurückversetzten Bereich geringer als in dem Restbereich ist. Um die beschriebenen Vorteile der besseren Materialbearbeitung zur Erzielung der voneinander getrennten Span- und Versatzfläche zu bewirken, reicht bereits ein geringer Versatz im Bereich der oben genannten Werte.

Dabei ergibt sich die Dicke des Schneideinsatzes insbesondere als die maximale Erstreckung des Schneideinsatzes in der Schneidrichtung, also der Werkzeugradialrichtung, und der Versatz von der Versatzfläche zu der Spanfläche ist weniger als die Hälfte der Dicke des Schneideinsatzes. Bei einem zu großem Versatz, welches einer zu geringen Dicke des verbleibenden Reststegs entspricht, besteht die Gefahr, dass dieser Reststeg bei der Benutzung des Werkzeugs bricht. Zudem wird der Querschnitt des Reststegs, wie später im Detail noch erläutert wird, als Abflußbahn für die an der Schneide eingebrachte Wärme genutzt. Und eine zu geringe oder zu große Querschnittsfläche des Reststegs bewirken jeweils, dass diese Funktion nicht mehr gewährleistet werden kann. Insbesondere ist der Versatz von der Versatzfläche zu der Spanfläche kleiner oder gleich einem Drittel der Dicke des Schneideinsatzes.

Bei dem Verkleben des Schneideinsatzes gibt es eine Zeitdauer des ausgerichteten Schneideinsatzes und zugleich des noch nicht ausgehärteten Klebstoffs. In dieser Zeitdauer wird eine große Standfläche, bzw. Grundfläche, benötigt, damit der Klebespalt sich durch das Eigengewicht des Schneideinsatzes nicht reduziert und/oder lokal erweitert und/oder der Schneideinsatz in seiner Aufnahme kippt.

Bevorzugt beträgt die Höhe des Schneideinsatzes in Werkzeugradialrichtung mindestens 6 mm und beträgt insbesondere mindestens 4 mm. Aus Gründen der Materialkosten wird im Allgemeinen angestrebt den Schneideinsatz möglichst klein zu gestalten und für ein sicheres Verkleben ist herkömmlich häufig eine Höhe von 2 bis 3 mm ausreichend. Bei Höhen von mehr als 6 mm wird eine ausreichende Entfernung zumindest eines Teils der Verklebung zu der Schneide dahingehend erreicht, dass die hohen Schneidentemperaturen nicht die von der Schneide entfernten Bereiche der Verklebung schädigen können. Wenn die Höhe größer als 6 mm ist, kann ein Kleber verwendet werden, der dauerhaft mindestens 200°C Temperatur aushält und wenn die Höhe größer als 4 mm ist, so kommt bevorzugt ein Klebstoff mit einer Maximaltemperatur von 250°C zum Einsatz.

Insbesondere sind die Schneideinsätze jeweils über vier Klebeflächen mit dem Grundkörper verklebt, wobei zwei dieser Klebeflächen im Wesentlichen senkrecht zur Werkzeugradialrichtung ausgerichtet sind und einen Versatz in Radialrichtung zueinander aufweisen. Der Begriff "im Wesentlichen senkrecht" umfasst insbesondere eine Winkelabweichung von 15° oder bevorzugt +/- 5° in alle Richtungen zur Radialen. Über diese zwei Klebeflächen wird eine vergrößerte radiale Standfläche erreicht. Naturgemäß kann es aus produktionstechnischen Gründen nie so sein, dass diese beiden Klebespalte identisch breit sind. Vielmehr wird bevorzugt der Klebespalt bei der Grundfläche des Schneideinsatzes, die der Haltefläche benachbart ist, als Hauptklebefläche definiert, so dass dort der Klebespalt dünner ist, als der andere Klebespalt, der bei der Nebenfläche liegt, also der Spanfläche benachbart ist.

Bevorzugt weisen die Schneideinsätze zwischen der Versatzfläche und der Haltefläche ein unteres Volumen auf, wobei dieses Volumen weniger als 50% des Gesamtvolumens des Schneideinsatzes beträgt. Dieses Volumen ist insbesondere der lotrecht auf die Versatzfläche projektierte Volumenanteil des Gesamtvolumens des Schneideinsatzes. Da das Restvolumen somit mehr als 50% des Schneideinsatzvolumens beträgt, wird über dieses Volumen eine Art Reservoir für die Wärme, die beim Schneidvorgang aufgenommen wird, geschaffen. In dem Zeitraum, in dem das Werkzeug nicht im Eingriff ist, wird diese Wärme gleichmäßig an die Umgebung abgegeben.

Bevorzugt kann das Material des Werkzeugs eine Keramik, monokristalline Werkstoffe, CVD-Beschichtungen, PVD- Beschichtungen, CBN-Werkstoff, Schneidkeramik oder ähnliches aufweisen. Dabei kann dies als ein Vollmaterial oder als eine Beschichtung ausgeführt sein. Auch kann ein Hartmetallwerkzeug verwendet werden, dass wahlweise beschichtet oder unbeschichtet ist.

Insbesondere kann zwischen den Schneideinsätzen und dem Grundkörper jeweils ein Hinterschnitt in Werkzeugradialrichtung vorgesehen sein, der bei der Rotation des Werkzeugs gegen Lösen der Schneideinsätze aufgrund von Zentrifugalkräften wirkt. Hierdurch kann zum einen die Belastung der Schneideinsätze durch die Schneidkräfte und vor allem die Zentrifugalkräfte reduziert werden. Zum anderen kann ein Schutz gegen das Lösen der Schneideinsätze aufgrund der Zentrifugalkräfte erzielt werden. Ein sich lösender Schneideinsatz kann aufgrund seiner hohen kinetischen Energie eine deutliche Gefahr für die Umgebung, wie vor allem die Mitarbeiter, bedeuten.

Bevorzugt kann der Hinterschnitt derart ausgestaltet sein, dass bei einer Drehung des Werkzeugs unter Einsatzbedingungen und bei einem vollständigen Lösen der Klebeverbindungen, die Schneideinsätze durch den Hinterschnitt nicht in Zentrifugalrichtung gehalten werden können. Naturgemäß wäre es besser, wenn die Schneideinsätze komplett gegen ein entsprechendes Lösen geschützt wären. Dies könnte man mit einer Schwalbenschwanzführung oder einer T-Führung realisieren. Diese Führungen weisen aber eine Vielzahl von korrespondierenden Flächen an dem Schneideinsatz und der Grundkörper des Werkzeugs auf, die jeweils mit einer hohen Genauigkeit gefertigt werden müssten, so dass die Herstellkosten hoch wären. Es wurde hingegen erkannt, dass bei der Verwendung des Werkzeugs unter hohen Arbeitsbelastungen lediglich eine temperaturbedingte Haltekraftreduzierung der Verklebungen der Schneideinsätze auftritt. Die verbleibende Rest-Haltekraft bewirkt in Verbindung mit dem Hinterschnitt, dass eine ausreichende Sicherheit gegen das Lösen von den Schneideinsätzen gewährleistet wird. In diesem Sinne wird in jedem Fall der Schneideinsatz vor allem von der Verklebung gehalten und durch den Hinterschnitt ergibt sich eine gewisse zusätzliche Sicherheit.

In einem Verfahren zur Herstellung eines spanabhebenden Werkzeugs, wird in einem ersten Verfahrensschritt eine Mehrzahl von Schneideinsätzen mit genau definierten Maßen hergestellt, die in einem zweiten Schritt mit einem Grundkörper des Werkzeugs verklebt werden. Dabei werden bei der Verklebung der Schneideinsätze mit dem Werkzeug die Schneideinsätze derart genau positioniert, dass das Werkzeug ohne eine materialabtragende Oberflächenbearbeitung an den Schneideinsätzen für seinen Arbeitseinsatz verwendbar ist. Wenn das Werkzeug ein Fräskopf ist, der zum seitlichen und axialen Schneiden bzw. Vorschub geeignet ist, so können an jedem Schneideinsatz auch mehrere Schneidkanten vorgesehen sein.

Im Folgenden wird die Erfindung anhand schematischer Zeichnungen an Ausführungsbeispielen näher erläutert. Es zeigt:
- Fig. 1: eine perspektivische Darstellung eines Teils eines Sägeblatts mit einem Schneideinsatz in Form einer Explosionsansicht,
- Fig. 2: und Fig. 3 jeweils die gleiche Ansicht eines Schneideinsatzes mit unterschiedlichen Bezugszeichen,
- Fig. 4: zeigt drei gedrehte Ansichten eines alternativen Schneideinsatzes,
- Fig. 5: zwei seitliche Ansichten des Schneideblatts, jeweils mit und ohne Schneideinsätzen,
- Fig. 6: und Fig. 7 jeweils eine schematische Seitenansicht zur Verdeutlichung des Vorteils einer geringeren Wackelgefahr,
- Fig. 8: zeigt eine alternative Ausführungsform, bei der die Versatzfläche in einem Winkel zu der Spanfläche steht,
- Fig. 9: zeigt eine weitere alternative Ausführungsform, bei der die Versatzfläche in einem Winkel zu der Spanfläche steht und zusätzlich ein Versatz dieser Flächen vorgesehen ist und
- Fig. 10: und 11 zeigen Ausführungsformen mit Variationen der Spanflächengeometrie.

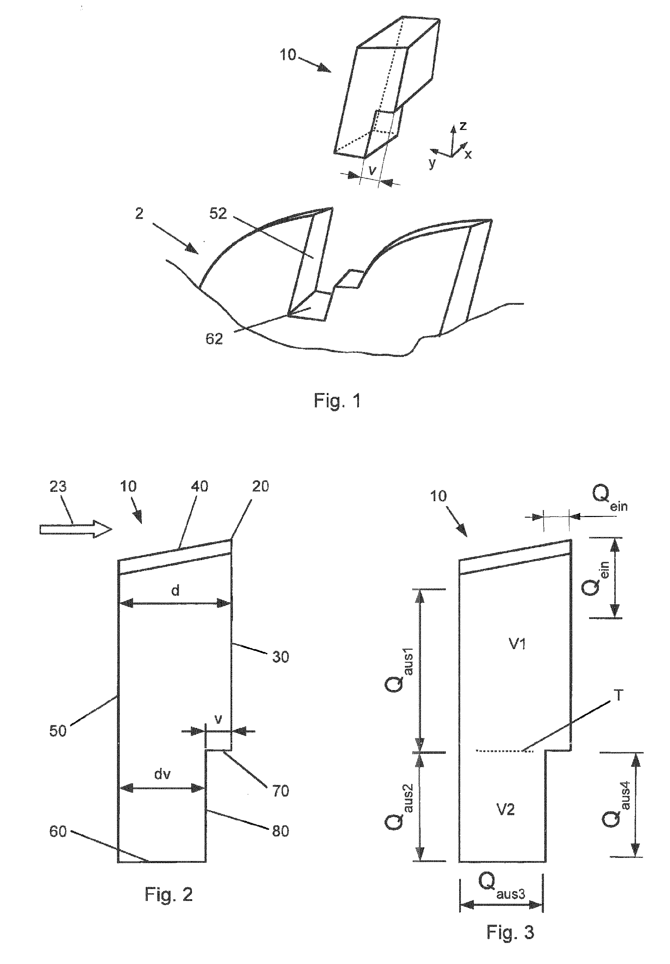

Fig. 1 zeigt einen beispielhaften Schneideinsatz 10. Der Schneideinsatz 10 weist im Wesentlichen die Form eines Quaders auf, wobei die gegenüberliegenden Flächen nicht parallel zueinander geformt sein müssen und wobei benachbarte Flächen zueinander nicht in einem 90°-Winkel angeordnet sein müssen, sondern bevorzugt einen Winkel von 90° +/- 20°, insbesondere 90° +/- 10° aufweisen können. Eine der Oberflächen weist einen Absatz bzw. einen Versatz v auf. Aufgrund des Versatzes v ergibt sich eine erste Fläche, bei der der Schneideinsatz eine Dicke d aufweist und die als die Spanfläche 30 bezeichnet wird und eine zweite Fläche, die relativ zur Spanfläche 30 nach innen so versetzt ist, dass sich bei ihr eine Dicke dv ergibt, die geringer ist, als die Dicke d.

Die Höhe des Schneideinsatzes kann bevorzugt 10 mm betragen. Auch kommen bevorzugt Höhen von 20 oder bis zu 25 mm zum Einsatz. Aufgrund der nachfolgend erläuterten Zusammenhänge können sich die vorteilhaften Eigenschaften der besseren Wärmeableitung bereits ausbilden, sofern eine Höhe von mindestens 6 mm vorliegt. Bei Einsatzbedingungen mit geringerer Schneidgeschwindigkeit kann die Höhe mindestens 4 mm betragen. Die Höhe erstreckt sich in z-Richtung (siehe Fig. 1) und entspricht der Radialrichtung des Werkzeugs. Im oberen Bereich wird das Schneidwerkzeug in z-Richtung durch die Freifläche 40 begrenzt und nach unten durch die Grundfläche 60. Die Tiefe des Schneideinsatzes, also die Erstreckung in x-Richtung, kann 6 mm betragen. Die Tiefe entspricht bevorzugt der Länge der Schneide 20. Bevorzugt liegt die Tiefe des Werkzeugs dann zwischen 3 und 10 mm, wenn das Werkzeug als ein Sägeblatt ausgeführt ist. Wenn das Werkzeug zur flächigen Materialbearbeitung verwendet werden soll, kann die Tiefe bspw. bis ca. 30 mm betragen. Die Tiefe kann trapezförmig mit geringerer Erstreckung in z-Richtung abnehmen. Wenn die Tiefe bei der Schneide 20 bspw. 6 mm beträgt, kann sie in Richtung zu der Grundfläche 60 des Schneideinsatzes auf 5 mm abnehmen. Bei einer Holz- oder Aluminiumzerspanung kann die Schnittgeschwindigkeit 50 - 100 m/s betragen. Bei einer Stahlbearbeitung liegt sie mit 100 bis 200 m/ min deutlich niedriger.

Die Dicke des Schneideinsatzes, also die Erstreckung in y-Richtung kann im oberen Bereich, also bei der Schneide 20 ca. 4 mm betragen. Die Spanfläche 30 kann mit einer gegenüberliegenden Haltefläche 50 im Wesentlichen parallel sein, oder insbesondere in einem Winkel von +/- 10° liegen. Die Spanfläche 30 endet mit dem Versatz v, wobei der Versatz derart in z-Richtung, also insbesondere in Werkzeugradialrichtung, positioniert ist, dass sich ein oberer Bereich ergibt, der in der Nähe der Schneide 20 liegt, und ein unterer Bereich in der Nähe der Grundfläche. Das Verhältnis des unteren Bereichs zur Gesamthöhe liegt in z-Richtung bevorzugt bei 0,3 wobei das Verhältnis im Allgemeinen zwischen 0,2 und 0,5 liegen kann. Die Spanfläche 30 ist komplett nicht-verklebt mit dem Grundkörper 2 des Werkzeugs. Dies schließt auch ein, dass keine insbesondere radial nach innen (also zur Werkzeugdrehachse) gerichtete Verlängerung der Spanfläche vorgesehen ist, die in etwa in der Ebene der Spanfläche 30 liegt und die zu der Verklebung und/oder sonstigen Verbindung mit dem Grundkörper 2 des Werkzeugs dient. Mit anderen Worten: Es besteht kein Klebespalt und/oder keine sonstige Verbindungsebene die in der Verlängerung der Spanfläche 30 radial nach innen gerichtet ist. Der Begriff "radial" umfasst einen Bereich von bis zu +/- 40° zu der geometrisch exakten Radialrichtung.

Der Schneideinsatz wird zum spanabhebenden Schneiden verwendet, was insbesondere als Bohren, Fräsen oder Sägen bezeichnet werden kann. Dazu weist das Material des Schneideinsatzes eine hohe Härte auf. Bevorzugt ist das Material schlag- und/oder verschleißfest ausgeführt. Verwendung können Materialien finden, die als Vollmaterial diese Eigenschaften aufweisen, oder es kann ein Grundkörper beschichtet werden. Die Beschichtung kann bevorzugt lediglich im Bereich der Schneide 20 vorgesehen sein. Als Schneidwerkstoffe eignet sich Schneidkeramik, polykristalliner Diamant (PKD), Cubic Boron Nitride (CBN), CVD-Diamant-Beschichtungen und sonstige CVD- oder PVD-Beschichtungen oder Cermet. Bevorzugt können mittels PVD erzeugte TiN oder AlTiN-Beschichtungen zum Einsatz kommen. Auch kann Hartmetall zum Einsatz kommen. CVD-Beschichtungen werden bei ca. 1000°C durchgeführt. Aus diesem Grund ist es zwingend notwendig, dass die Beschichtung vor dem Verkleben der Schneideinsätze mit dem Grundkörper vorgenommen wird.

Fig. 1 zeigt zudem den Grundkörper 2 des Werkzeugs 1, in welchem die Schneideinsätze 10 eingeklebt werden. Da ein Sägeblatt gezeigt ist, ist die Dicke des Grundkörpers, die in der x-Richtung liegt, etwas geringer als die Tiefe des Schneideinsatzes. Der Schneideinsatz ist über vier Flächen mit dem Grundkörper 2 verklebt, nämlich der Haltefläche 50, der Grundfläche 60, der Versatzfläche 80 und einer Nebenfläche 70, die sich über die Breite des Versatzes und die Schneideinsatztiefe ergibt. Diese Nebenfläche ist genauso wie die Grundfläche im Wesentlichen senkrecht zur Werkzeugradialrichtung, also der z-Richtung, ausgerichtet, wobei bevorzugt Abweichungen von +/- 10° möglich sind.

Aus Fig. 3 ergibt sich, dass der Schneideinsatz durch eine virtuelle Trennlinie T in der x-y-Ebene in zwei Bereiche geteilt wird, nämlich das obere Volume V1 der Dicke d und das untere Volumen V2 der Dicke dv.

Insbesondere die Verklebung im Bereich des Volumens V2 ist für die Dauerfestigkeit der Verklebung relevant. Dort besteht bei der Haltefläche 50, der Grundfläche 60 und der Versatzfläche 80 ein Klebespalt im 0,1 bis 0,3 mm Bereich.

Als Klebstoff kann insbesondere ein Klebstoff auf einer Epoxid-Basis verwendet werden.

Dieser kann beispielsweise ein Einkomponentenklebstoff sein, der thermisch ausgehärtet wird. Die Festigkeit kann dabei typischerweise in einem Bereich von -40° bis 220°C oder bis 250°C gegeben sein. Bei Erreichen der oberen Temperatur fällt die Festigkeit nicht abrupt auf Null ab, sondern nimmt sukzessiv ab, so dass beispielsweise erlaubt werden kann, dass die Temperatur zeitweilig über die genannte Obergrenze steigt, wenn dabei die Belastung nicht sonderlich stark ist. Zudem ist dabei auf die Belastungsart zu achten. Druckbelastungen können auch bei höheren Temperaturen besser ausgehalten werden, als bspw. Zug- oder Scherbelastungen. Bei der Verklebung werden sowohl der Schneideinsatz 10 an den zu verklebenden Flächen, wie auch der Grundkörper 2 mit dem Klebstoff benetzt. Wenn der Schneideinsatz 10 in seine Aufnahme des Grundkörpers 2 gesetzt wird, so richtet sich der Schneideinsatz in seiner Aufnahme aufgrund von Kapillarkräften gleichmäßig in y-Richtung aus. Mit einer automatischen Mess- und Positioniervorrichtung wird der Schneideinsatz zudem in y-Richtung positioniert und in x-Richtung solange verschoben, bis er sich in seiner Solllage befindet. Zudem wird der Schneideinsatz 10 durch diese Vorrichtung derart tief in negative z-Richtung gedrückt, bis der Schneideinsatz in dieser Richtung, also der Werkzeugradialrichtung ausgerichtet ist. Die Positioniergenauigkeit in diese Richtungen beträgt anwendungsabhängig 10 bis 20 µm. Nach der Positionierung des Schneideinsatzes wird er und seine direkte Umgebung, bevorzugt induktiv, erwärmt, so dass eine Teilaushärtung zur Fixierung des Schneideinsatzes an seiner Sollposition stattfindet. Nachdem sämtliche Schneideinsätze auf diese Weise fixiert wurden, wird das Werkzeug 1 in einen Aushärteofen verbracht und dort über 30 Minuten bei ca. 150°C temperiert, wodurch der Klebstoff zu seiner Sollhärte aushärtet.

An der Schneide 20 können bei hohen Schneidleistungen Temperaturen von 1000°C auftreten. Hohe Schneidleistungen ergeben sich insbesondere bei einer Kombination von einer hohen Schneidgeschwindigkeit und einem hohen Vorschub. Die beiden wesentlichsten Ursachen der hohen Temperaturen, sind die Temperaturerzeugung bei der Materialverformung des Spans während des Schneidevorgangs und das Gleiten und Reiben des Spans entlang der Spanfläche 30. Ein Teil dieser Energie wird über den Span abgeleitet. Ein anderer beträchtlicher Teil wird in den Schneideinsatz geleitet. Dies geschieht an Bereichen, die der Schneide 20 benachbart sind. Fig. 3 zeigt dabei diese Wärmeeintrittszonen Qₑᵢₙ. Der Wärmeaustritt findet über alle anderen Oberflächen des Schneideinsatzes statt und teilt sich in den Wärmeübergang an den Grundkörper 2 des Werkzeugs 1 und in den Wärmeübergang an den restlichen Flächen an die Umgebungsluft und/oder ein Kühlmedium. Da der letztere Wärmeübergang nicht Teil der Erfindung ist, wird er im Folgenden nicht näher diskutiert und nur noch der Wärmeübergang Qₐᵤₛ aus dem Material in den Grundkörper 2 betrachtet. Dieser ist in Abhängigkeit der einzelnen Flächen in Fig. 3 eingezeichnet.

Unmittelbar an der Schneide 20 können, wie bereits erwähnt, Temperaturen von 1000°C auftreten. Der Klebstoff der Schneideinsatzverklebung kann aber lediglich deutlich niedrigere Temperaturen aushalten. Aus diesem Grund ist der Schneideinsatz wie oben beschrieben ausgestaltet, um vor allem über eine dauerhafte und sichere Verklebung des unteren Bereichs V2 zu gewährleisten, dass der gesamte Schneideinsatz sicher dauerhaft gehalten wird.

Bei jeder Umdrehung des Werkzeugs ist jeder Schneideinsatz, abhängig von den konkreten Arbeitsbedingungen, nur zu 5% oder 10% der Zeit im Eingriff mit dem Werkstück. Die Dauer des Wärmeeintrags ist also nur 5% oder 10% einer Werkzeugumdrehung. Die Wärme ist bestrebt, sich in dem Material des Schneideinsatzes möglichst gleichmäßig auszubreiten. Aus diesem Grund ist das Werkzeug in der Nähe der Schneide 20 mit der Dicke d ausgestaltet. Sie ist deutlich höher, als es aufgrund der benötigten Festigkeit nötig wäre und so ergibt sich ein relativ hohes großes Volumen V1, innerhalb dessen die Wärme sich über die Dauer einer Werkzeugumdrehung verteilen kann. Aufgrund dieser Mittelung reduziert sich bereits die maximale Temperatur, die auf die Klebstellen wirkt.

Auch hat der Schneideinsatz mit 10 mm eine größere Höhe, als dies für die reine Verarbeitung, also die Verklebung und die Klebfestigkeit notwendig wäre. Bevorzugt kann die Höhe maximal 20 oder 25 mm betragen Über die gesamte Oberfläche des Schneideinsatzes wird kontinuierlich Temperatur abgeleitet. So nimmt die Temperatur mit einer größeren Entfernung von der Schneide 20 ab. Die Schneide ist unter anderem über die Flächen, die mit Qₐᵤₛ₁ und Qₐᵤₛ₂ bezeichnet ist, mit dem Grundkörper verklebt. An jeder Stelle dieser Flächen wird Wärme an den Grundkörper abgegeben. Es strömt zwar stetig Wärme von der Schneide 20 nach, aber bei der Grundfläche 60 und daran angrenzenden Abschnitten der Halte- und Versatzfläche kommt nur ein Teil der Schneidenwärme an, so dass dort die Wärmebelastung auf die Verklebung reduziert ist.

Als eine besondere konstruktive Maßnahme zur Reduzierung der Temperaturbelastungen im unteren Bereich des Schneideinsatzes, also bei den Flächen Qₐᵤₛ₂, Qₐᵤₛ₃ und Qₐᵤₛ₄, dient der Versatz v der Versatzfläche 80 gegenüber der Spanfläche 30. Um dies zu verdeutlichen, ist in Fig. 3 die virtuelle Trennlinie T eingezeichnet. Der Wärmefluss innerhalb eines Materials ist proportional zu der Querschnittsfläche. Die Querschnittsfläche bei der Trennlinie T und darunter ist geringer als im oberen Bereich, wo der Schneideinsatz 10 die Dicke d aufweist. Somit kann nur ein reduzierter Anteil der im Bereich V1 vorhandenen Wärme in den unteren Bereich V2 wandern. Das Verhältnis von den Flächen des Wärmeübergangs an den Grundkörper 2, nämlich das Verhältnis von (Qₐᵤₛ₂ + Qₐᵤₛ₃ + Qₐᵤₛ₄) / dv ist deutlich größer als das Verhältnis der Wärmeübergangsfläche Qₐᵤₛ₁ / d. Somit wird die Wärme aus dem unteren Bereich V2 stärker abgeleitet, als über den Querschnitt T nachströmen kann. Hierdurch wird die Erhöhung der Wärme im unteren Bereich, also dem Volumen V2 effektiv beschränkt, so dass die maximale Temperatur der Verklebung auch bei hohen Schneidleistungen nicht überschritten wird.

Als allgemeine Regel ergibt sich, dass die Wärmebelastung des Volumens V2 dann um so mehr reduziert wird, die dünner die Dicke dv ist.

Es kann nicht in jedem Fall der Verwendung des Werkzeugs 1 sicher ausgeschlossen werden, dass die Verklebung bei der Zone Qₐᵤₛ₁ nicht unzulässig hohen Temperaturen ausgesetzt wird. Da dort beim eigentlichen Schneidevorgang vor allem Druckkräfte wirken, ist eine gewisse Schädigung dieses Klebebereichs deshalb tolerierbar, da bei dem unteren Bereich V2 weiter eine gute Verklebung sichergestellt bleibt.

Auch ist eine geringe Dicke dv aufgrund von Temperaturwechselbelastungen vorteilhaft. Das Material des Grundkörpers 2 hat nämlich einen anderen Temperaturdehnungswert, als das Material des Schneideinsatzes 10. Näherungsweise kann davon ausgegangen werden, dass die Temperatur des Volumens V2 identisch zu der Temperatur des umgebenden Grundkörpers 2 ist. Beide, sowohl der Schneideinsatz werden sich bei einer erhöhten Temperatur in y-Richtung dehnen. Aufgrund der unterschiedlichen Temperaturdehungswerte ergibt sich eine Differenz oder ein Delta Δ dieser Werte. Dieses Delta Δ wirkt als eine Belastung auf die Verklebung an den Flächen Qₐᵤₛ₂ und Qₐᵤₛ₄. Da dieses Delta proportional zu der Dicke dv ist, ergeben sich für geringe Dicken dv im unteren Bereich V2 des Schneideinsatzes 10, geringere Temperaturwechselbelastungen der Verklebung dieser Flächen Qₐᵤₛ₂ und Qₐᵤₛ₄.

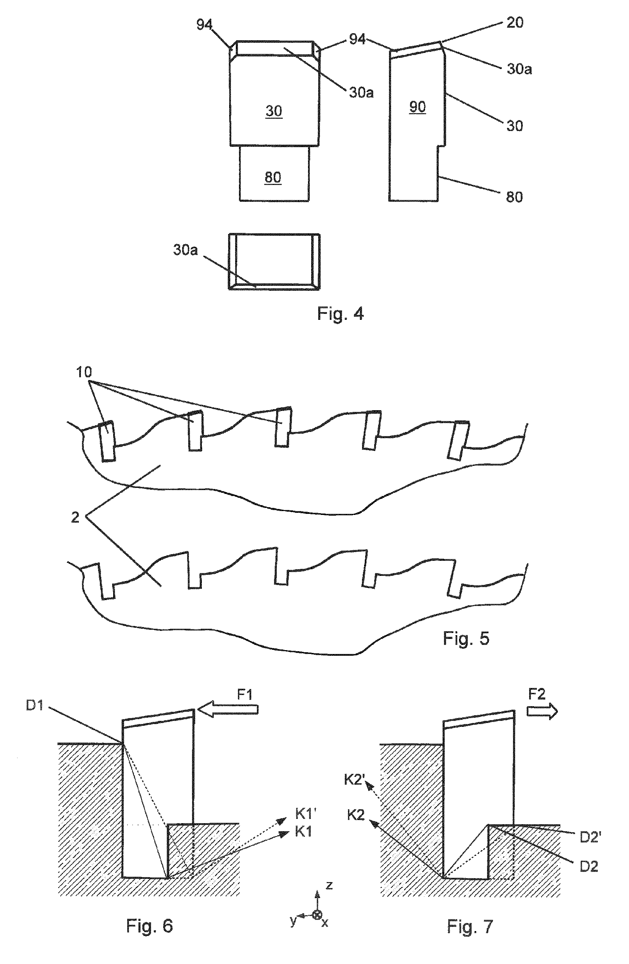

Fig. 6 und Fig. 7 zeigen einen weiteren Vorteil, der sich bei reduzierten Dicken dv des unteren Bereichs des Schneideinsatzes ergibt. Fig. 6 zeigt die auf die Schneide wirkende Kraft F1 bei einer normalen Schneidbewegung. Beim Austritt der Schneide aus dem Material geht die Kraft F1 unmittelbar auf Null zurück und aufgrund elastischer Spannungen im Material entsteht eine entgegen gerichtete Kraft F2. (siehe Fig.7)

Die Kraft F1 bewirkt über den Drehpunkt D1 eine Kippkraft K1. Eine derartige Kippkraft K1 ist geeignet durch ein Herauskippeln den Schneideinsatz zu lösen. Zudem zeigt Fig. 6 mit einer gepunkteten Linie den aus dem Stand der Technik bekannten Fall, dass der Schneideinsatz keinen Versatz im unteren Bereich aufweist. In diesem Fall ergibt sich eine Kippkraft K1'. Diese Kraft K1' hat einen höheren Anteil in z-Richtung. Je größer dieser Anteil in z-Richtung, desto größer ist die Gefahr, dass die Verklebung sich über die Vielzahl der Belastungen löst. Und somit bewirkt die kleinere Kraftkomponente der K1 in z-Richtung den Vorteil der besseren Verklebung. Fig. 7 zeigt den entsprechenden Fall mit der entgegen gesetzt gerichteten Kraft F2. Und auch hier zeigt sich, dass die Kraftrichtung K2, die sich bei einem Kippeln eines mit einem Versatz ausgestatteten Schneideinsatzes ergibt, einen weniger großen Anteil in z-Richtung hat, als ein aus dem Stand der Technik bekannter Schneideinsatz mit der Kraft K2'. Somit ergibt sich hierdurch eine bessere Verklebung.

Vorstehend wurden Vorteile von einem großen Versatz v aufgeführt, bei dem also die Dicke dv möglichst gering ist. Eine zu geringe Dicke dv ist kann aber auch nachteilig sein, da eine minimale Dicke notwendig ist, um Kräfte, die sich aus den Schneidkräften ergeben, aufzunehmen. Auch ergibt sich aus dem bevorzugten Verfahren des Verklebens eine minimale Dicke dv. Bei dem Verkleben wird der Schneideinsatz nämlich von oben in seine Position eingeführt. Solange der Klebstoff noch nicht ausgehärtet ist, steht er mit seiner Grundfläche 60 auf der entsprechenden Gegenfläche 62 des Grundkörpers 2. Um einen sicheren Stand und ein Kippen des Schneideinsatzes zu diesem unverklebten Zeitpunkt zu vermeiden, sollte die Dicke dv mindestens 50% der Dicke d des Schneideinsatzes 10 in seinem oberen Bereich betragen.

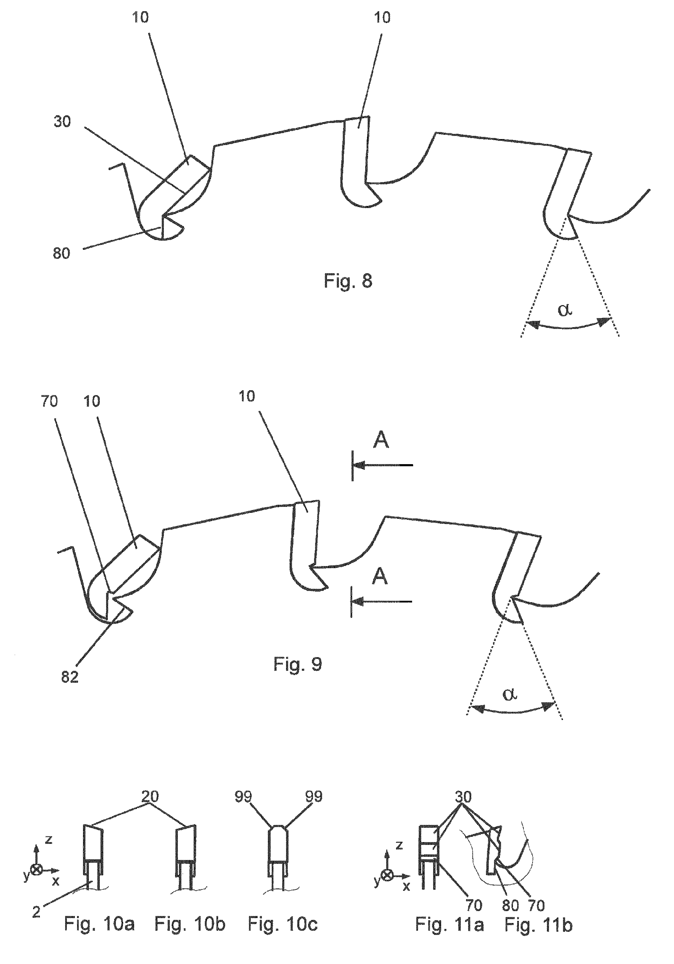

Bei einem typischen Klebespalt von 0,1 mm bis 0,3 mm und Spandicken von 0,07 bis 0,15 mm hat es herkömmlich bekannten Ausführungsformen stets das Problem gegeben, dass die Späne unmittelbar mit dem Klebstoff in Kontakt treten konnten. Sie konnten in den Klebespalt eindringen, sich dort brechen und das Ableiten von folgenden Spänen behindern und über die zeitliche Erosion des Klebstoffs wurde das Problem des Eindringens nach und nach größer. Dieses Problem wird durch den Versatz v und/oder die Neigung von der Spanfläche zu der Versatzfläche gelöst. Der Versatz v sorgt dafür, dass die Späne nicht in den Klebespalten, also insbesondere zwischen der Versatzfläche 80 und dem Grundkörper 2 und der Nebenfläche 70 und dem Grundkörper, eindringen können. Da der Spalt bei der Nebenfläche 70 und dem Grundkörper 2 in einem Winkel von mindestens 45°, bevorzugt 90° +/-10° liegt, müssten die Späne in ihrer Bewegung nämlich entsprechend umgelenkt werden, wofür aber keine Veranlassung besteht. Späne, die entlang der Spanfläche 30 abgeleitet werden, treffen auf das entsprechende Material des Grundkörpers und werden dort gebrochen. Aufgrund des Versatzes v können sie nicht in den Klebespalt zwischen der Versatzfläche 80 und dem Grundkörper 2 gelangen. Ferner können die Späne auch nicht in den Spalt zwischen der Nebenfläche 70 und dem Grundkörper 2 gelangen, da hierfür eine deutliche Umlenkung notwendig wäre. Der gleiche Effekt ergibt sich auch, wenn auch abgemildert, bei der in Fig. 8 gezeigten Ausführungsform.

Fig. 4 zeigt drei Ansichten eines alternativen Schneideinsatzes. Hierbei ist an beiden axial ausgerichteten Flächen 90 im Übergang zu der Freifläche 40 eine Phase 94 angeordnet. Zudem ist eine weitere Phase 30a an der Schneide 20, also im Übergang von der Spanfläche 30 zu der Freifläche 40 vorgesehen. Diese Phase 30a ist nicht zwingend notwendig und die vorstehend erläuterten Vorteile der Befestigung des Schneideinsatzes und Einflüsse auf die Temperaturverteilung ergeben sich unabhängig davon, ob eine Phase 30a vorhanden ist oder nicht. Bei dem Schneiden gleitet der Span sowohl entlang der Phase 30a als auch einem der Phase 30a benachbarten Teil der Spanfläche 30. Aus diesem Grund wird die Phase als Teil der Spanfläche 30 angesehen.

Fig. 5 zeigt zwei Ausschnitte eines Sägeblatts 2 mit und ohne eingeklebte Schneideinsätze 10. Der Durchmesser des Sägeblatts kann dabei 100 cm betragen und/oder mit mindestens 50 Schneideinsätzen bestückt sein.

Fig. 8 zeigt eine alternative Ausführungsform, bei der die Versatzfläche in einem Winkel zu der Spanfläche steht. Dabei liegt zwischen der Spanfläche 30 und der Versatzfläche 80 ein Winkel von 45° vor. Bevorzugt kann dieser Winkel zwischen 30° und 60° liegen. Allgemein ergeben sich die nachfolgend genannten Vorteile in Winkelbereichen von 10° bis 80°.

Während bei den vorstehend beschriebenen Ausführungsformen zwischen der Versatzfläche und der Spanfläche stets ein Versatz v gelegen hat, wird der Begriff "Versatzfläche" im Allgemeinen so definiert, dass es eine Fläche ist, die gegenüber der Spanfläche einen Versatz oder eine Neigung hat. Der Schneideinsatz 10 kann bei der Verklebung in eine entsprechende Aufnahme des Grundkörpers 2 geschwenkt werden. Dieser Schwenkvorgang wird durch den linken und mittleren Schneideinsatz 10 der Fig. 8 verdeutlicht. Dabei ist links der Schneideinsatz bei dem Einsetzen in den Grundkörper und vor dem Verkleben gezeigt. Nachdem der Schneideinsatz derart positioniert wurde, wird er geschwenkt, so dass er in die mittig gezeigte Lage kommt, in welcher er exakt ausgerichtet wird. Danach wird der Klebstoff durch Wärmezufuhr nacheinander Schneideinsatz für Schneideinsatz zunächst teilausgehärtet und anschließend wird das gesamte Werkzeug ausgehärtet. Die Schneidkräfte F1 (siehe Fig. 6) wirken derart, dass bei dem Schneiden der Schneideinsatz tendenziell weiter in die beschriebene Halterichtung geschwenkt wird. Bei hohen Schneidbelastungen und entsprechend hohen Temperaturen kann die Klebeverbindung ggf. graduell erweichen, so dass die maximale Haltekraft nicht gegeben sein kann. Aufgrund der beschriebenen Geometrie kann der Schneideinsatz dennoch sicher im Grundkörper 2 gehalten werden.

Die Fläche 82 des Grundkörpers 2 ist die Klebefläche mit der Versatzfläche 80 und ist nach radial einwärts ausgerichtet, so dass Kraftanteile der Verklebung als Druckkraft in Radialrichtung der Zentrifugalkraft entgegenwirken. Gemäß Fig. 8 sind Versatzfläche 80 und die Spanfläche 30 unmittelbar benachbart, so dass beide Flächen sich direkt berühren und keine Nebenfläche existiert. Die entsprechende Berührungslinie liegt in der x-Richtung (siehe Fig. 1).

Die Ausführungsform der Fig. 9 verbindet die Vorteile der Ausführungsformen der Fig. 1 bis 7 mit der Ausführungsform der Fig. 8. Hierbei weist die Versatzfläche 80 einen Versatz zu der Spanfläche 30 auf, so dass sich im Übergang dieser Flächen eine Nebenfläche 70 ergibt, wie dies oben bereits im Detail beschrieben wurde. Zudem liegt ein Winkel α von größer als 10° zwischen der Span- und der Versatzfläche vor, wie dies mit den damit verbundenen Vorteilen bereits in Bezug auf Fig. 8 erläutert wurde.

Die Fig. 10a, 10b, 10c und 11a zeigen alternative Schneideinsätze aus dem Blickwinkel des Schnitts A-A der Fig. 9, also in der Draufsicht in der x-z-Ebene. Dabei ist das Werkzeug als eine Säge ausgeführt. In positiver und negativer x-Richtung ragt der Schneideinsatz über den Grundkörper 2 hinaus. Fig. 10a und 10b zeigen, dass die Schneide 20 nicht in der Achsrichtung des Werkzeugs liegen muss, sondern geneigt sein kann. An der Schneide können seitlich Phasen 99 vorgesehen sein. Die Größe der Phase kann in Schneidrichtung zu- oder abnehmen.

Fig. 11b zeigt eine um 90° gedrehte Seitenansicht der Ausführungsform, die in Fig. 11a gezeigt ist. Die Spanfläche 30 muss nicht eben sein, sondern sie kann Erhöhungen oder Vertiefungen umfassen. Allgemein wird (werden) als Spanfläche 30 die Fläche oder die Flächen des Schneideinsatzes verstanden, an denen der Span unter normalen Arbeitsbedingungen abgleiten kann. Gemäß Fig. 11b geht die Spanfläche über in die Nebenfläche 70. Diese muss nicht in einem 90°-Winkel zu der Spanfläche 30 geneigt sein. An der Nebenfläche 70 findet bevorzugt kein Abgleiten von Spänen statt. In der Verlängerung der Nebenfläche 70 ist die Versatzfläche 80 angeordnet, mit welcher die Verklebung realisiert wird.

Die Schneide 20 ist so ausgerichtet, dass sie in etwa in Richtung der Werkzeuglängsachse ausgerichtet ist, wobei bevorzugt eine Winkelabweichung von bis zu +/- 60° oder insbesondere 45° bestehen kann. Die Freiflächen 40 sind im Wesentlichen an aus Sicht des Werkzeugdrehachse radial außen liegenden Flächen der einzelnen Schneideinsätze 10 vorgesehen. Die Schneide 20 liegt jeweils an dem Übergang der Freifläche 40 zu der Spanfläche 30 oder zu der an der Spanfläche 30 angeordneten Phase 30a. Die Haltefläche 50 und/oder die Versatzfläche 80 und/oder die Nebenfläche 70 und/oder die Grundfläche 60 ist und sind bevorzugt so ausgerichtet, dass sie nicht in der Ebene des Werkzeugquerschnitts liegen.

Merkmale unterschiedlicher Ausführungsformen sind frei miteinander kombinierbar, sofern keine konstruktiven Gründe zwingend dagegen sprechen. Die in der Beschreibung verwendete Ausrichtung "oben" bezieht sich auf einen großen Wert in z-Richtung (siehe Fig. 1) oder radial außen liegend. Die in der Beschreibung und den Ansprüchen angegebenen Maße und Größen des Schneideinsatzes beziehen sich bei einem Schneideinsatz mit nicht parallelen gegenüber liegenden Flächen auf den jeweils maximalen Abstand in jeweils radialer, axialer und/oder tangentialer Richtung des Werkzeugs. Bezugszeichen werden bei unterschiedlichen Ausführungsformen identisch verwendet, sofern die entsprechend bezeichneten Flächen vergleichbare Funktionen aufweisen.

## Patentansprüche

1. Spanabhebendes Werkzeug (1), das einen Grundkörper (2) und eine Mehrzahl mit dem Grundkörper (2) verklebter Schneideinsätze (10) aufweist, wobei jeder Schneideinsatz (10) eine Schneide (20) umfasst,
und die Schneide sich als die Kante zwischen der Spanfläche (30) und der Freifläche (40) ergibt,
wobei der Schneideinsatz (10) gegenüberliegend von der Spanfläche (30) eine Haltefläche (50) aufweist, die mit dem Grundkörper (2) verklebt ist,
und einem Teil der Haltefläche (50) gegenüberliegend und von der Schneide (20) entfernt eine Versatzfläche (80) vorgesehen ist, die mit dem Grundkörper (2) verklebt ist,
**dadurch gekennzeichnet, dass**
zwischen der Versatzfläche (80) und der Spanfläche (30) ein Versatz (v) besteht und/oder
dass zwischen der Versatzfläche (80) und der Spanfläche (30) ein Winkel (α) besteht, der größer als 10° und kleiner als 80° ist.

2. Werkzeug gemäß Anspruch 1,
**dadurch gekennzeichnet, dass**
der Versatz (v) von der Versatzfläche (80) zu der Spanfläche (30) mindestens 0,7 mm und insbesondere mindestens 1 mm beträgt und bevorzugt ferner die Versatzfläche (80) gegenüber der Spanfläche (30) zurückversetzt ist.

3. Werkzeug gemäß Anspruch 1 oder 2,
**dadurch gekennzeichnet, dass**
die Dicke (d) des Schneideinsatzes sich als die maximale Erstreckung des Schneideinsatzes in Schneidrichtung (23) ergibt und der Versatz (v) von der Versatzfläche zu der Spanfläche (30) weniger als die Hälfte der Dicke (d) des Schneideinsatzes ist.

4. Werkzeug gemäß Anspruch 3,
**dadurch gekennzeichnet, dass**
der Versatz von der Versatzfläche (80) zu der Spanfläche (30) kleiner oder gleich einem Drittel der Dicke (d) des Schneideinsatzes (10) ist.

5. Werkzeug gemäß einem der vorangegangenen Ansprüche,
**dadurch gekennzeichnet, dass**
die Höhe des Schneideinsatzes in Werkzeugradialrichtung mindestens 4 mm beträgt und insbesondere mindestens 6 mm beträgt.

6. Werkzeug gemäß einem der vorangegangenen Ansprüche,
**dadurch gekennzeichnet, dass**
die Schneideinsätze jeweils über vier Klebeflächen (50, 60, 70, 80) mit dem Grundkörper verklebt ist, wobei zwei dieser Klebeflächen (60, 70) im Wesentlichen senkrecht zur Werkzeugradialrichtung ausgerichtet sind und einen Versatz in Radialrichtung zueinander aufweisen.

7. Werkzeug gemäß Anspruch 6, **dadurch gekennzeichnet, dass**
der Klebespalt zwischen dem Grundkörper (2) und der Klebefläche (60), die im Wesentlichen senkrecht zu der Werkzeugradialrichtung ausgerichtet ist und näher an der Haltefläche (50) liegt, kleiner ist,
als der Klebespalt zwischen dem Grundkörper und der Klebefläche (70), die im Wesentlichen senkrecht zu der Werkzeugradialrichtung ausgerichtet ist und weiter von an der Haltefläche (50) entfernt ist.

8. Werkzeug gemäß einem der vorangegangenen Ansprüche,
**dadurch gekennzeichnet, dass**
die Schneideinsätze zwischen der Versatzfläche (80) und der Haltefläche (50) ein unteres Volumen (V2) aufweisen, wobei das Volumen (V2) weniger als 50% des Gesamtvolumens des Schneideinsatzes beträgt.

9. Werkzeug gemäß einem der vorangegangenen Ansprüche, wobei das Material Keramik, monokristalline Werkstoffe, CVD-Beschichtungen, PVD-Beschichtungen, CBN-Werkstoff und/oder Schneidkeramik aufweist und/oder damit zumindest teilweise überzogen ist.

10. Werkzeug gemäß einem der vorangegangenen Ansprüche, wobei zwischen den Schneideinsätzen (10) und dem Grundkörper (2) jeweils ein Hinterschnitt in Werkzeugradialrichtung vorgesehen ist, der insbesondere bei der Rotation des Werkzeugs gegen Lösen von den Schneideinsätzen (10) aufgrund von Zentrifugalkräften wirkt.

11. Werkzeug gemäß Anspruch 10, wobei der Hinterschnitt derart ausgestaltet ist, dass bei einer Drehung des Werkzeugs unter Einsatzbedingungen und bei einem vollständigen Lösen der Klebeverbindungen, die Schneideinsätze durch den Hinterschnitt nicht in Zentrifugalrichtung gehalten werden können.

12. Verfahren zur Herstellung eines spanabhebendes Werkzeugs, wobei in einem ersten Verfahrensschritt eine Mehrzahl von Schneideinsätzen mit genau definierten Maßen hergestellt wird, die in einem zweiten Schritt mit einem Grundkörper des Werkzeugs verklebt werden,
**dadurch gekennzeichnet, dass**
bei der Verklebung der Schneideinsätze mit dem Werkzeug die Schneideinsätze derart genau positioniert werden, dass das Werkzeug ohne eine materialabtragende Oberflächenbearbeitung an den Schneideinsätzen für seinen Arbeitseinsatz verwendbar ist.
